# EUROPÄISCHE PATENTSCHRIFT

(11) **EP 0 453 005 B1**
(45) Veröffentlichungstag und Bekanntmachung des Hinweises auf die Patenterteilung: **25.01.1995**
(21) Anmeldenummer: 91200499.1
(22) Anmeldetag: 07.03.1991
(51) Int. Cl.: B01D 53/34

(54) **Abgas-Reinigungsverfahren**
Process for scrubbing flue gases
Procédé d'épuration des gaz d'échappement

(30) Priorität: 18.04.1990 DE 4012320
(43) Veröffentlichungstag der Anmeldung: 23.10.1991
(73) Patentinhaber: METALLGESELLSCHAFT Aktiengesellschaft, 60015 Frankfurt (DE)
(72) Erfinder: Schmidt, Hans-Joachim, Dr., W-6000 Frankfurt am Main (DE); Stegemann, Bertold, W-6000 Frankfurt am Main (DE); Stein, Dieter, W-6200 Wiesbaden (DE); Bröckl, Rudolf, W-6000 Frankfurt am Main (DE)

(56) Entgegenhaltungen:
- EP-A- 0 254 697
- EP-A- 0 304 412
- DE-A- 2 735 566
- DE-A- 3 529 270

## Beschreibung

Die Erfindung bezieht sich auf ein Verfahren zur Reinigung von Abgasen, die außer Flugasche noch gasförmige Schadstoffe, wie SO₂, HCl und HF, sowie flüchtige Schwermetalle, insbesondere Quecksilberverbindungen, enthalten, durch trockene Feststoffabscheidung und zweistufiges Waschen mit im Kreislauf geführter Waschflüssigkeit.

Derartige Verfahren werden u.a. zur Reinigung der Abgase von Müllverbrennungsanlagen (MVA) eingesetzt, die außer wechselnden Mengen an Flugstaub pro Nm³ bis 10 000 mg HCl, bis 2 000 mg SO₂, bis 1 000 mg HF und bis 100 mg Schwermetalle enthalten können. Diese Abgase müssen nach den jeweils geltenden Vorschriften gereinigt werden (Grenzwerte für MVA in Deutschland nach TA-Luft (1986): HCl ≦ 50, SO₂ ≦ 100, HF ≦ 2,0, Schwermetalle (Klasse I, II, III) ≦ 0,1/1,0/5,0, jeweils in mg/Nm³).

Im Prinzip führt die Lösung des Umweltproblems "Abgas" durch nasse Reinigung immer zu dem neuen Umweltproblem "Abwasser", d.h. das Abgasproblem kann erst dann als erledigt angesehen werden, wenn auch das Abwasserproblem befriedigend gelöst und auch für eine gesicherte Endlagerung der zwangsläufig anfallenden Reststoffe gesorgt ist.

Abgesehen von den Fällen, in denen eine trockene Abgasreinigung als Alternative in Betracht kommt und gewählt wird, muß man bei der nassen Abgasreinigung also immer verhältnismäßig komplizierte Anlagen und Verfahrenskonzeptionen in Kauf nehmen, die hinsichtlich der dabei ablaufenden chemischen Reaktionen außerdem für viele Betreiber weitgehend undurchschaubar bleiben. Neben dem allgemeinen Bemühen um eine möglichst überschaubare Problemlösung ist man auch aus diesen Gründen stets bestrebt, die auf die jeweiligen Schadstoffgehalte und vorgeschriebenen Reingaswerte abgestellte Abgasreinigung so einfach wie möglich zu gestalten.

Unter dem Gesichtspunkt Betriebssicherheit muß in erster Linie die Verfügbarkeit der Abgasreinigungseinrichtung berücksichtigt werden, weil bei Störfällen notwendigerweise die "Abgasproduktion" unterbrochen werden muß, d.h. das Kraftwerk, die Müllverbrennungsanlage oder der chemische Produktionsbetrieb muß stillgelegt werden, bis die Abgasreinigung wieder funktionsfähig ist. Zur Betriebssicherheit gehört aber auch, daß die Abgasreinigungseinrichtung auf stark wechselnde Betriebszustände, wie sie wegen der unterschiedlichen Brennstoffqualität insbesondere bei Müllverbrennungsanlagen auftreten, so reagieren kann, daß die geforderten Reingaswerte in jedem Fall erreicht werden, ohne daß ein neues Abwasser- oder Deponieproblem entsteht.

Schließlich soll die Abgasreinigung selbstverständlich so wirtschaftlich wie möglich durchgeführt werden, wobei man immer die Gesamtkonzeption im Auge behalten muß. Eine einfache Anlage mit niedrigen Gestehungskosten ist unwirtschaftlich, wenn sie über ihre Gesamtbetriebszeit mit vergleichsweise hohen Kosten für Reaktionsmittel, Energieaufwand und Reststoffbeseitigung verbunden ist. Auf der anderen Seite nützt eine sehr effektive Anlage wenig, wenn ihre Gestehungskosten außergewöhnlich hoch sind oder wenn ihre Verfügbarkeit wegen zu großer Komplizierung nur gering ist.

Aus dem Dokument EP-A-0 304 412 ist ein Verfahren zur Behandlung von Verbrennungsrückständen einer Verbrennungsanlage, insbesondere einer Abfallverbrennungsanlage, bekannt. Dabei wird die Flugasche aus dem Abgasstrom abfiltriert und das Rauchgas einer Rauchgas-Naßwäsche unterzogen. In den Fällen, in denen eine saure und eine basische Waschstufe vorgesehen ist, erfolgt eine Zusammenführung der Abstoßwasserströme. Die pH-Wert-Führung der Waschstufen kann in weiten Bereichen erfolgen. Weiterhin wird in dem Dokument DE-A-2735566 ein Verfahren zum Entfernen von Fluorverbindungen und Schwefeldioxid aus Abgasen offenbart. Die Schadstoffbestandteile des Rauchgases werden nach diesem Verfahren durch eine zweistufige Naßwäsche aus dem Abgas entfernt, wobei die Waschlösungen mit Hilfe von Calciumhydroxid regeneriert und die Abstoßwasserströme gleichfalls gemeinsam behandelt werden.

Bei der Erfindung ist man von einem Verfahren der eingangs genannten Art ausgegangen, bei dem der für einen guten Abscheidegrad der gasförmigen Schadstoffe notwendige niedrige Partialdruck dieser Schadstoffe über der Waschflüssigkeit allerdings nur durch eine hohe Ausschleusungsrate der Waschflüssigkeit eingehalten wird. Mit anderen Worten in der waschflüssigkeit dürfen bestimmte Höchstwerte an Schadstoffkonzentrationen nicht überschritten werden, weil sonst der Partialdruck für diese Stoffe zu stark ansteigt und der Abscheidegrad überproportional verschlechtert wird. Ein hoher Abscheidegrad kann bei derartigen Verfahren daher nur erreicht werden, wenn eine für große Ausschleusungsmengen dimensionierte Abwasseraufbereitungs- und -eindampfanlage vorgesehen wird, für die ein entsprechend hoher Betriebsmittelaufwand erforderlich ist. Die Forderung nach hohen Abscheidegraden führt bei Verfahren dieser Art also zwangsläufig zu hohen Investitions- und Betriebskosten. Außerdem fallen bei der notwendigen Aufbereitung der Waschflüssigkeit verhältnismäßig große Mengen an unbrauchbaren Reststoffen an, deren Endlagerung mit weiteren hohen Kosten verbunden ist.

Der Erfindung liegt die Aufgabe zugrunde, bei dem bekannten Verfahren die aufgezeigten Mängel zu überwinden, d.h. ein Verfahren vorzuschlagen, mit dem die Abgasreinigung insgesamt wesentlich wirtschaftlicher durchgeführt werden kann, ohne daß auf eine kompliziertere Anlage oder Verfahrensführung zurückgegriffen werden muß und ohne daß Abstriche bei der Betriebssicherheit in Kauf zu nehmen sind.

Zur Lösung dieser Aufgabe wird vorgeschlagen, das eingangs beschriebene Verfahren in der Weise zu betreiben, daß
a) die Abgase in einer ersten Waschstufe unter Einstellung einer Temperatur von 50 bis 70°C mit einer saueren Waschflüssigkeit behandelt werden, bei der durch geregelte Zugabe von Wasser und einer unterstöchiometrischen Menge an Alkalihydroxid sowie durch Ausschleusen von Waschflüssigkeit ein pH-Wert von etwa 2 eingestellt wird,
b) die Abgase in einer zweiten Waschstufe, unter Beibehaltung der Temperatur der ersten Waschstufe mit einer Alkalihydroxid enthaltenden basischen Waschflüssigkeit behandelt werden, bei der durch geregelte Zugabe von Wasser und Base sowie durch Ausschleusen von Waschflüssigkeit ein pH-Wert von etwa 7,5 eingestellt wird, und ein gereinigtes Abgas erhalten wird,
c) die aus der ersten Waschstufe ausgeschleuste Waschflüssigkeit mit Fällungs- und Flockungsmitteln behandelt und einem Trennvorgang zugeführt wird, wobei man
   (1) als erstes zu deponierendes Restprodukt einen die Schwermetalle und Fluorverbindungen enthaltenden Schlamm sowie
   (2) eine alkalichloridhaltige Lösung erhält, aus der
   (3) durch Eindampfen und Entwässern einerseits weiterverwertbare Alkalichloride und andererseits eine Restlösung und Kondensat gewonnen werden, die in die erste Waschsstufe rückführbar sind, und
d) die aus der zweiten Waschstufe ausgeschleuste Waschflüssigkeit getrennt von der Waschflüssigkeit gemäß Verfahrensstufe c) aufbereitet wird, indem man durch Eindampfen und Entwässern
   (1) ein zweites zu deponierendes, im wesentlichen Alkalisulfat enthaltendes Restprodukt sowie
   (2) eine Restlösung und Kondensat erhält, die in die zweite Waschstufe rückführbar sind.

Dabei wird als Alkalihydroxid Natronlauge verwendet. Gegebenenfalls kann es von Vorteil sein, wenn die Fällungs- und Flockungsmittel statt in die ausgeschleuste Waschflüssigkeit in den Kreislauf der ersten Waschstufe eingebracht werden.

Bei dem erfindungsgemäßen Verfahren werden die in der ersten Waschstufe aus dem Abgas abgeschiedenen sauren Schadgase HCl und HF durch unterstöchiometrische Zumischung von Basen weitgehend in ihre Salze überführt, wodurch deren Partialdruck entsprechend herabgesetzt wird, so daß in dieser ersten, sauer gefahrenen Waschstufe neben einer guten Abscheidung von Schwermetallen auch eine sehr effektive Abscheidung von HCl und HF erreicht werden kann, ohne daß dazu permanent eine große Menge Waschflüssigkeit aus dem Kreislauf abgeführt werden muß. Dementsprechend kann die Anlage zur Aufbereitung der Waschflüssigkeit deutlich kleiner als bei den herkömmlichen Verfahren gehalten werden, wodurch die Investitionskosten sinken. Ein weiterer großer Vorteil wird dadurch erreicht, daß die aus den Kreisläufen ausgeschleusten Waschflüssigkeitsmengen einer getrennten Aufbereitung unterzogen werden. Dadurch können die in der ersten Waschstufe anfallenden chloridhaltigen Salze getrennt zurückgewonnen und einer Weiterverwertung zugeführt werden, während sie bei herkömmlichen Verfahren zusammen mit den Restprodukten einer Endlagerung zugeführt werden mußten. Die mit dem erfindungsgemäßen Verfahren erzielbaren wirtschaftlichen Vorteile lassen sich wie folgt zusammenfassen:
(1) Reduzierung der Investitionskosten für Aufbereitung und Eindampfung der Waschflüssigkeit um ca. 15 %.
(2) Reduzierung des Dampfbedarfs für die Eindampfung um ca. 30 %.
(3) Reduzierung des elektrischen Energiebedarfs für Aufbereitung und Eindampfung um etwa 15 %.
(4) Reduzierung der insgesamt anfallenden Reststoffmengen um etwa 30 %, wovon die chloridhaltigen Salze weiterverwertbar sind und nicht deponiert werden müssen.
(5) Reduzierung der zu deponierenden Reststoffmenge um 30 bis 50 %.

Durch die erfindungsgemäße Weiterentwicklung des bekannten Verfahrens ist keine Komplizierung der Anlagenkonzeption oder Betriebsweise notwendig geworden. Auch hinsichtlich der Verfügbarkeit und Betriebssicherheit einer auf das erfindungsgemäße Verfahren abgestimmten Anlagenkonzeption müssen keine Nachteile in Kauf genommen werden. Insgesamt kann demnach die Reinigung von Abgasen, die außer Flugasche noch gasförmige Schadstoffe, wie SO₂, HCl und HF sowie flüchtige Schwermetalle, insbesondere Quecksilberverbindungen, enthalten, wirtschaftlich wesentlich günstiger durchgeführt werden.

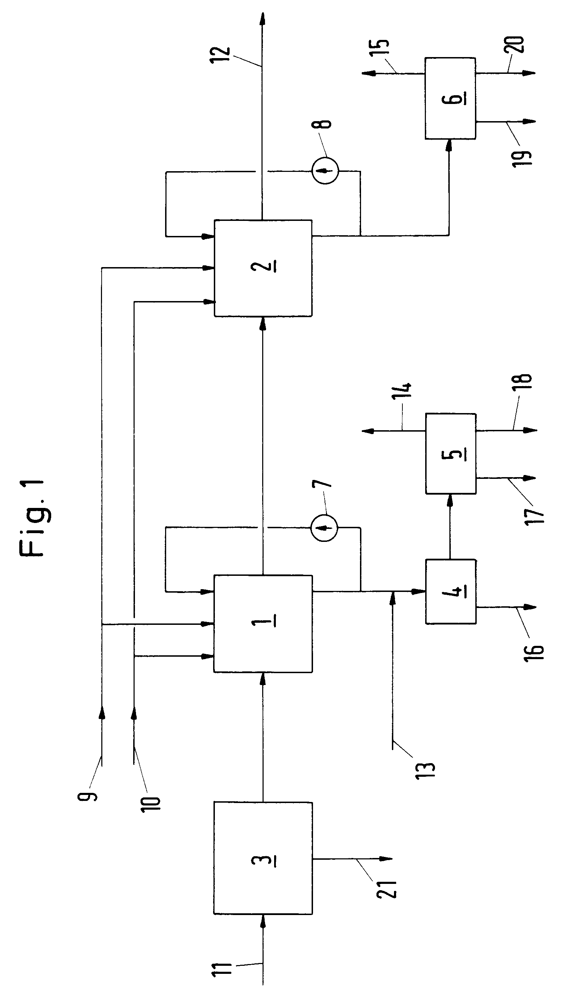

Weitere Einzelheiten des Erfindungsgedankens werden anhand des in Fig. 1 dargestellten Schaltbildes näher erläutert.

Über die Leitung (11) wird das Abgas zunächst einer Einrichtung (3) zur Abscheidung von Feststoffen, d.h. von Flugstaub und dergleichen, zugeführt, die über die Leitung (21) aus dem System abgeführt werden. Danach durchläuft das Abgas nacheinander die Wäscher (1) und (2) und wird über die Leitung (12) gereinigt an die Umgebung abgegeben. Beide Wäscher (1) und (2) werden mit im Kreislauf geführter Waschflüssigkeit beaufschlagt, die mittels der Pumpen (7) und (8) gefördert wird. Über die Leitungen (9) und (10) werden die Waschkreisläufe mit frischem Wasser und frischem Reaktionsmittel (Basen) versorgt.

Aus dem Kreislauf des ersten Wäschers (1) wird ein Teil der Waschflüssigkeit ausgeschleust und nach Zugabe von Fällungs- und Flockungsmitteln über die Leitung (13) in eine Einrichtung (4) überführt, in der ein die Schwermetalle und Fluorverbindungen enthaltender Schlamm abgetrennt und nach Entwässerung über die Leitung (16) als erstes zu deponierendes Restprodukt aus dem Verfahren ausgeschleust wird. Die derartig vom Schlamm befreite Waschflüssigkeit, eine alkalichloridhaltige Lösung, wird in einer Einrichtung (5) verdampft, wobei man einerseits weiterverwertbare Alkalichloridsalze und andererseits eine Restlösung und Kondensat gewinnt. Die Alkalichloridsalze werden über die Leitung (17) ausgeschleust, während die Restlösung über die Leitung (18) und das Kondensat über die Leitung (14) abgeführt werden. Restlösung und Kondensat können an geeigneter Stelle in das Verfahren zurückgeführt werden, so daß keine gesonderte Abwasserentsorgung vorgesehen werden muß.

Auch aus dem Kreislauf des zweiten Wäschers (2) wird ein Teil der Waschflüssigkeit ausgeschleust und in einer Einrichtung (6) verdampft. Dabei fällt ein zweites, im wesentlichen Natriumsulfat enthaltendes Restprodukt an, das über die Leitung (19) aus dem Verfahren ausgeschleust wird. Außerdem fällt auch hier eine Restlösung und Kondensat an, die über die Leitungen (20) und (15) abfließen und in das Verfahren zurückgeführt werden können.

Werden die in den Verdampfern (5) und (6) anfallenden Mengen an Kondensat und Restlösung insgesamt in das Verfahren zurückgeführt, entfällt jegliche Abwasserentsorgung. Das erfindungsgemäße Abgasreinigungsverfahren "produziert" dann nur gereinigtes Abgas (Leitung (12)), als erstes zu deponierendes Restprodukt einen die Schwermetalle und Fluorverbindungen enthaltenden Schlamm (Leitung (16)), wiederverwendbare Alkalichloridsalze (Leitung (17)) und ein zweites zu deponierendes Restprodukt (Leitung (19)), das im wesentlichen Natriumsulfat enthält.

## Patentansprüche

1. Verfahren zur Reinigung von Abgasen, die außer Flugasche noch gasförmige Schadstoffe, wie SO₂, HCl und HF, sowie flüchtige Schwermetalle, insbesondere Quecksilberverbindungen, enthalten, durch trockene Feststoffabscheidung und zweistufiges Waschen mit im Kreislauf geführter Waschflüssigkeit, wobei
a) die Abgase in einer ersten Waschstufe unter Einstellung einer Temperatur von 50 bis 70°C mit einer sauren Waschflüssigkeit behandelt werden, bei der durch geregelte Zugabe von Wasser und einer unterstöchiometrischen Menge an Alkalihydroxid sowie durch Ausschleusen von Waschflüssigkeit ein pH-Wert von etwa 2 eingestellt wird,
b) die Abgase in einer zweiten Waschstufe unter Beibehaltung der Temperatur der ersten Waschstufe mit einer Alkalihydroxid enthaltenden basischen Waschflüssigkeit behandelt werden, bei der durch geregelte Zugabe von Wasser und Base sowie durch Ausschleusen von Waschflüssigkeit ein pH-Wert von etwa 7,5 eingestellt wird, und ein gereinigtes Abgas erhalten wird,
c) die aus der ersten Waschstufe ausgeschleuste Waschflüssigkeit mit Fällungs- und Flockungsmitteln behandelt und einem Trennvorgang zugeführt wird, wobei man
(1) als erstes zu deponierendes Restprodukt einen die Schwermetalle und Fluorverbindungen enthaltenden Schlamm sowie
(2) eine alkalichloridhaltige Lösung erhält, aus der
(3) durch Eindampfen und Entwässern einerseits weiterverwertbare Alkalichloride und andererseits eine Restlösung und Kondensat gewonnen werden, die in die erste Waschstufe rückführbar sind, und
d) die aus der zweiten Waschstufe ausgeschleuste Waschflüssigkeit getrennt von der Waschflüssigkeit gemäß Verfahrensstufe c) aufbereitet wird, indem man durch Eindampfen und Entwässern
(1) ein zweites zu deponierendes, im wesentlichen Alkalisulfat enthaltendes Restprodukt sowie
(2) eine Restlösung und Kondensat erhält, die in die zweite Waschstufe rückführbar sind.

2. Verfahren nach Anspruch 1, dadurch gekennzeichnet, daß als Alkalihydroxid Natronlauge verwendet wird.

3. Verfahren nach Anspruch 1, dadurch gekennzeichnet, daß die Fällungs- und Flockungsmittel -alternativ zu Merkmal c)- in die im Kreislauf geführte Waschflüssigkeit der ersten Stufe eingebracht werden.

## Claims

1. A method for purifying waste gases which in addition to fly ash also contain gaseous pollutants, such as SO₂, HCl and HF, and volatile heavy metals, in particular mercury compounds, by the dry separation of solids and two-stage washing with washing liquid which is circulated, in which
a) the waste gases are treated in a first washing stage with an acidic washing solution at a set temperature of 50 to 70°C, in which a pH value of about 2 is set by the controlled addition of water and a hypostoichiometric quantity of alkali hydroxide and by withdrawing washing liquid,
b) the waste gases are treated with a basic washing liquid containing alkali hydroxide in a second washing stage, while maintaining the temperature of the first washing stage, in which a pH value of about 7.5 is set by the controlled addition of water and base and by withdrawing washing liquid, and a purified waste gas is obtained,
c) the washing liquid withdrawn from the first washing stage is treated with precipitants and flocculants and is sent to a separating operation, in which
(1) a sludge containing the heavy metals and fluorine compounds as the first residual product to be dumped and
(2) a solution containing alkali chloride are obtained, from which
(3) by evaporation and dewatering, firstly reusable alkali chlorides and secondly a residual solution and condensate are obtained which can be recycled into the first washing stage, and
d) the washing liquid withdrawn from the second washing stage is processed separately from the washing liquid of process stage c) in that by evaporation and dewatering
(1) a second residual product which is to be dumped, which contains essentially alkali sulphate, and
(2) a residual solution and condensate are obtained which can be recycled back into the second washing stage.

2. A method according to Claim 1, characterised in that sodium hydroxide solution is used as the alkali hydroxide.

3. A method according to Claim 1, characterised in that the precipitant and flocculant as an alternative to feature c) are introduced into the circulated washing liquid of the first stage.

## Revendications

1. Procédé d'épuration d'effluents gazeux qui contiennent, outre des cendres volantes, des substances polluantes gazeuses comme SO₂, HCl et HF, ainsi que des métaux lourds volatils, notamment des composés du mercure, par séparation à sec de matières solides et lavage en deux stades par du liquide de lavage circulant en circuit fermé, qui consiste
a) à traiter les effluents gazeux dans un premier stade de lavage en réglant la température entre 50 et 70°C par un liquide acide de lavage, en établissant par additions réglées d'eau et d'une quantité hypostoechiométrique d'hydroxyde de métal alcalin ainsi que par soutirage de liquide de lavage un pH de 2 environ,
b) à traiter l'effluent gazeux dans un deuxième stade de lavage, tout en maintenant la température du premier stade de lavage par un liquide de lavage basique contenant un hydroxyde de métal alcalin, en réglant par additions réglées d'eau et de base ainsi que par soutirage de liquide de lavage le pH à 7,5 environ, et à obtenir un effluent gazeux épuré,
c) à traiter le liquide de lavage soutiré du premier stade de lavage par des agents de précipitation et de floculation et à l'envoyer à une opération de séparation, dans lequel
(1) on obtient comme premier produit résiduel à mettre à la décharge une boue contenant les métaux lourds et les composés fluorés ainsi que
(2) une solution contenant des chlorures de métal alcalin, de laquelle
(3) on récupère par évaporation et par déshydratation d'une part des chlorures de métal alcalin valorisables et d'autre part une solution résiduelle et un produit condensé que l'on peut retourner au premier stade de lavage, et
d) à traiter le liquide de lavage soutiré du premier stade de lavage indépendamment du liquide de lavage suivant le stade de procédé c), en obtenant par évaporation et par déshydratation
(1) un deuxième produit résiduel à mettre à la décharge et contenant essentiellement du sulfate de métal alcalin, ainsi que
(2) une solution résiduelle et un produit condensé qui peuvent être retournés au deuxième stade de lavage.

2. Procédé suivant la revendication 1, caractérisé en qu'il consiste à utiliser de la soude caustique comme hydroxyde de métal alcalin.

3. Procédé suivant la revendication 1, caractérisé en ce qu'il consiste à injecter les agents de précipitation et de floculation - en variante à la caractéristique c) - dans le liquide de lavage du premier stade qui circule en circuit fermé.
